Europäisches Patentamt

(19) European Patent Office

Office européen des brevets

(11) Publication number: **0 014 266**
**A1**

# (12) EUROPEAN PATENT APPLICATION

(21) Application number: **79200058.0**

(22) Date of filing: **01.02.79**

(51) Int. Cl.³: **A 61 G 5/04**
**H 02 P 5/16**

(43) Date of publication of application:
**20.08.80 Bulletin 80/17**

(84) Designated Contracting States:
**CH DE NL SE**

(71) Applicant: **Petronics**
**No. 441B, Heereweg**
**NL-2161 DB Lisse(NL)**

(72) Inventor: **Van Delft, Ronald**
**No. 163, Beukenrode**
**NL-2215 JD Voorhout(NL)**

(72) Inventor: **Tausch, Peter Alfons Otto**
**No. 155, Beukenrode**
**NL-2215 JD Voorhout(NL)**

(74) Representative: **Hoijtink, Reinoud et al,**
**OCTROOIBUREAU ARNOLD & SIEDSMA Sweelinckplein 1**
**NL-2517 GK The Hague(NL)**

(54) **Improvements in and relating to electrically driven wheel-chairs.**

(57) A vehicle, particularly a wheel-chair, driven by an electromotor (4) which is powered by a supply of direct current, said vehicle being provided with a motor control circuit to keep the speed of the motor at a chosen adjusted value by the steps of producing a signal which is representative of the speed, comparing the signal with the adjusted speed value and controlling, in dependence on the measured difference, the mean value of the current supplied to the motor, in which the signal which is representative of the speed of the motor is a voltage derived from the current flowing through the motor.

EP 0 014 266 A1

1

"Improvements in and relating to electrically
driven wheel-chairs"
_____

The invention relates to a vehicle,
particularly a wheel-chair, driven by an electromotor which is powered by a supply of direct current,
said vehicle being provided with a motor control
circuit to keep the speed of the motor at a chosen
adjusted value by the steps of producing a signal
which is representative of the speed, comparing the
signal with the adjusted speed value and controlling,
in dependence on the measured difference, the mean
value of the current supplied to the motor. The
signal representative of the speed may be obtained
by the use of a tacho-sensor coupled to the motor
shaft and generating an alternating current voltage
having a frequency which is directly proportional
to the speed of the motor. To that end either a
special motor provided with a tacho-sensor or a
tacho-sensor separately mounted on the shaft of a
conventional motor must be used. Both possibilities
are expensive. A complication is formed by the fact that the frequency of the output signal of the tacho-sensor must be converted into a suitable regulating signal.

The invention has for its object to avoid the cited disadvantages and this is achieved in that the signal which is representative of the speed of the motor is a voltage derived from the current flowing through the motor. Then a conventional motor can be used, in which the speed of the motor is connected with the current flowing through the motor.

An optimally operating regulation is obtained, when the control circuit has such a back coupling as to ensure that its output impedance is of the same magnitude, although in the negative sense, as the inner impedance of the motor. This can be realized in that inserted in the control circuit is an amplifier, the output of which is positively back coupled by voltage by means of a first back coupling circuit and is negatively back coupled by current by means of a second back coupling circuit. For that purpose the motor may be connected to the output of the amplifier through a resistance and the second back coupling circuit may be connected to the junction point between the motor and said resistance.

In order to obtain a sufficiently high torque at low speeds the motor may be powered by current pulses, of which the periods are variable. To that end the input voltage of the control circuit may be a fixed alternating current voltage which is superposed on an adjustable direct current voltage.

In a wheel-chair for disabled persons the current flowing through the motor will be automatically increased when the speed is in danger of falling below the desired adjusted speed, so that a greater torque is produced to overcome the resistance affecting the speed in negative sense. This is possible without the invalid person having to operate the speed adjusting knob. An example thereof is running over a threshold. When the wheel-chair has not been equiped with the circuit according to the invention the user has to readjust the speed knob in upward sense when such a resistance is met. The result thereof is, that after the resistance has been overcome, the wheel-chair darts forward, which not only indoors, but also in the public highway is dangerous.

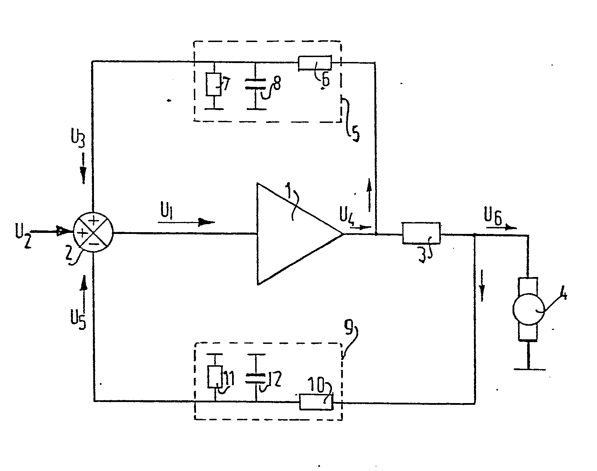

The invention will be elucidated with the aid of the drawing.

It shows a diagrammatic view of an embodiment of a control circuit according to the invention, to which a motor is connected.

The circuit includes an amplifier 1 with a very great voltage amplification. The input signal $u_1$ comes from the output of an analogical addition and deduction circuit 2. To the latter an input voltage $u_2$ is supplied which corresponds with an adjusted desired speed. The output of the amplifier 1 produces through the impedance 3 the current flowing through the motor 4.

Connected to the point between the output of the amplifier and the impedance 3 is the input terminal of an attenuating and integrating circuit 5 which consists of two resistances 6 and 7 and a capacitor 8, the output of which is connected with an addition-input of the addition and deduction circuit 2. The circuit 5 has, except for an attenuating function, a moderating function, whereby its output voltage $u_3$ is the attenuated time-average of the output voltage $u_4$ of the amplifier 1.

Connected to the point between the impedance 3 and the motor 4 is the input terminal of an attenuating and integrating circuit 9 which consists of two resistances 10 and 11 and a capacitor 12, the output of which is connected with an deduction-input of the addition and deduction circuit 2. The circuit 9 has, except for an attenuating function, a moderating function, whereby its output voltage $u_5$ is the attenuated time-average of its input voltage $u_6$.

In this way a positive voltage back coupling and a negative current back coupling are obtained. When the dimensioning is correct this composite back coupling produces an output impedance of the motor control circuit which has the same magnitude as the inner impedance of the motor but is negative.

When an input voltage $u_2$ is used which consists of a fixed alternating current voltage superposed on an adjustable direct current voltage the described circuit produces a motor supply which is constituted by current pulses of variable time period and constant amplitude.

The described input voltage can easily be obtained by means of an alternator generating an output voltage of which the frequency and the wave form are not critical and by means of an adjustable direct current voltage to be added to said alternating current voltage.

1

CLAIMS

1. A vehicle, particularly a wheel-chair, driven by an electromotor which is powered by a supply of direct current, said vehicle being provided with a motor control circuit to keep the speed of the motor at a chosen adjusted value by the steps of producing a signal which is representative of the speed, comparing the signal with the adjusted speed value and controlling, in dependence on the measured difference, the mean value of the current supplied to the motor, characterized in that the signal which is representative of the speed of the motor is a voltage derived from the current flowing through the motor.

2. A vehicle according to claim 1, characterized in that the control circuit has such a back coupling as to ensure that its output impedance is of the same magnitude, although in the negative sense, as the inner impedance of the motor.

3. A vehicle according to claim 2, characterized in that inserted in the control circuit is an amplifier, the output of which is positively back coupled by voltage by means of a first back coupling circuit and is negatively back coupled by current by means of a second back coupling circuit.

4. A vehicle according to claim 3, characterized in that the motor is connected to the output of the amplifier through a resistance and the second back coupling circuit is connected to the junction point between the motor and said resistance.

5. A vehicle according to claims 1-4, characterized in that the motor is powered by current pulses, of which the periods are variable.

6. A vehicle according to claim 5, characterized in that the input voltage of the control circuit is a fixed alternating current voltage which is superposed on an adjustable direct current voltage.

1/1

## EUROPEAN SEARCH REPORT

European Patent Office

| | DOCUMENTS CONSIDERED TO BE RELEVANT | | | CLASSIFICATION OF THE APPLICATION (Int. Cl. ³) |
|---|---|---|---|---|
| Category | Citation of document with indication, where appropriate, of relevant passages | | Relevant to claim | |
| | FR - A - 1 433 588 (CIT) <br> * Figure; page 1, left-hand column, line 25 - page 2, left-hand column, line 46 * <br> -- | | 1-4 | A 61 G 5/04 <br> H 02 P 5/16 |
| | ELECTRONIC DESIGN, vol. 26, no. 4, February 15, 1978, page 108, Rochelle Park, U.S.A. <br> J.M. PIHL: "Regulate motor-shaft speed better with an active bridge" <br> * Text and figure * <br> -- | | 1,3,4 | |
| | GB - A - 1 396 416 (W. HOUSTON) <br> * Figure; page 1, line 81 - page 2, line 8 * <br> -- | | 1,4 | TECHNICAL FIELDS SEARCHED (Int.Cl. ³) <br><br> A 61 G <br> H 02 P |
| | DE - A - 1 588 854 (STANDARD ELEKTRIK LORENZ) <br> * Figure; page 1, paragraph 1; page 2, paragraph 3; page 3, last paragraph - page 4, paragraph 3 * <br> -- | | 1,3,4 | |
| | FR - A - 2 337 637 (SAF-CHAINETTE) <br> * Figure 1; page 3, line 9 - page 7, line 21 * <br> -- | | 1 | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | DE - A - 2 203 770 (R. BOSCH) <br> * Figure 2; page 2, completely; page 5, paragraph 2; page 14, last paragraph - page 15, paragraph 1 * <br> -- ./. | | 1,5 | |

| | | &: member of the same patent family, corresponding document |
|---|---|---|
| The present search report has been drawn up for all claims | | |
| Place of search <br> The Hague | Date of completion of the search <br> 31-10-1979 | Examiner <br> VEREECKE |

EPO Form 1503.1 06.78

**European Patent Office**

**EUROPEAN SEARCH REPORT**

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | US - A - 3 412 306 (W. FISCHER)<br>* Figure 1; column 2, line 43 - column 3, line 34 * | 1,4,5 | |
| | US - A - 3 878 446 (A. BRANDT)<br>* Figure 1; column 2, lines 2-44 * | 1,4,5 | |
| | DE - A - 2 218 235 (OSTERREICHI-SCHE STUDIENGESELLSCHAFT FUR ATOMENERGIE GmbH)<br>* Figures 2,3; page 2, paragraphs 2,3 * | 1,3-5 | TECHNICAL FIELDS SEARCHED (Int. Cl. 3) |
| | US - A - 3 949 287 (E. WAGEN-SOMMER et al.)<br>* Figure 1: column 2, line 60 - column 4, line 19 * | 1,3,4 | |
| E,X | NL - A - 77 10 321 (PETRONICS)<br>* Whole document * | 1-6 | |

EPO Form 1503.2  06.78